# EUROPEAN PATENT APPLICATION

(11) **EP 2 093 097 A2**
(43) Date of publication of application: **26.08.2009**
(21) Application number: 09425070.1
(22) Date of filing: 20.02.2009
(51) Int. Cl.: B60L 5/32

(54) **Electro-pneumatic system for controlling push of shoes of pantographs for electric-powered vehicles, in particular trains**

(30) Priority: 25.02.2008 IT RM20080098
(71) Applicant: Stazzi, Rolando, 00040 Lanuvio (RM) (IT)
(72) Inventor: Stazzi, Rolando, 00040 Lanuvio (RM) (IT)
(74) Representative: Iannone, Carlo Luigi

(57) **Abstract**

The present invention concerns an electro-pneumatic system for controlling push of at least one shoe (11) of at least one pantograph (10) for electric-powered vehicles, in particular trains, comprising control means (20) connected to pneumatic means (21) capable to move said at least one pantograph (10), **characterised in that** said control means (20) controls said pneumatic means (21) on the basis of a detected speed of the electric-powered vehicle, so as to regulate a rise of said at least one pantograph (10) depending on said detected speed.

## Description

The present invention relates to an electro-pneumatic system for controlling push of shoes of pantographs for electric-powered vehicles, in particular trains, such as rail vehicles (e.g. electric locomotives), railway and tramway vehicles (e.g. underground railway trains and trams), and trolley vehicles (e.g. trolley bus), that allows to greatly reduce the wear of both trolley wires and current collecting elements, the system being simple and, consequently, inexpensive.

The present invention further relates to a pantograph system provided with such electro-pneumatic system, as well as a system for detecting wear of current collecting elements for electric-powered vehicles.

Electric-powered vehicles supplied by means of trolley line collect electric current, providing the energy necessary to the same, through suitable devices which come into contact with the electric cable of the trolley line, setting a mobile connection that must ensure continuity of the power supply circuit.

Among the contacting devices with which electric-powered vehicles are equipped, the pantographs, provided with a sliding shoe for contacting the electric cable of the trolley line, are among the most diffused ones, most of all in applications providing for a not straight power supply trolley line, since they well adapt to the variation of mutual position of electric cable and vehicle.

By way of example and not by way of limitation, in the following reference will be made to the case where the vehicle is a rail electric locomotive. However, it should be considered that the vehicle may be any electric-powered vehicle provided with a pantograph, such as, for instance, a railway or tramway vehicles (e.g. an underground railway vehicle or a tram), or a trolley vehicle (e.g. a trolley bus).

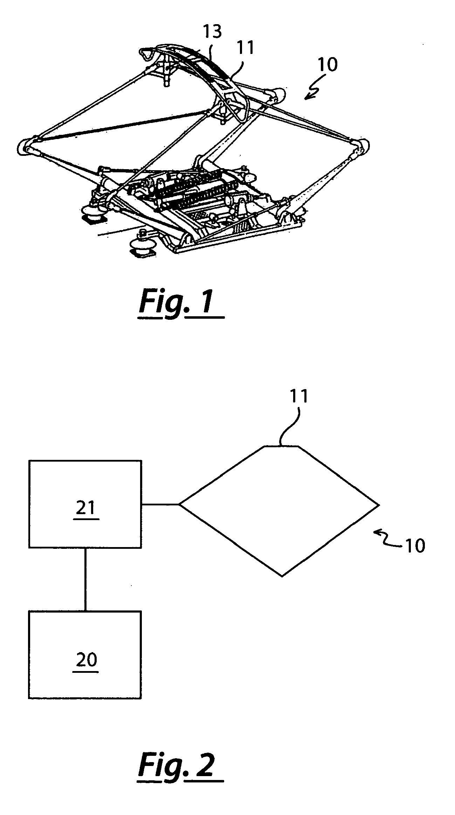

With reference to Figure 1, it may be observed that a prior art pantograph 10 is usually equipped with a shoe 11 on which quale diaphragm sliding contacts 13 are installed which are capable to come into contact with an electric cable of the trolley line, setting the continuity of the power supply circuit.

As it is known, control of the position of the pantograph 10 occurs through a pneumatic system controlling rising and lowering of the shoe 11.

One of the most experienced problems in this field is constituted by temporary detachment of the shoe 11 from the overhead cable, due to mechanical perturbations during train advance. Such problem causes negative effects of mechanical type, such as the wear of sliding contacts 13 and cables of the trolley line, of electrical type, such as the incostant current collection with consequent noise present in the power supply of the vehicle, and of electromagnetic type, such as the occurrence of noise and disturbances on the electrical devices on board and on the surrounding space.

In order to obviate the problem of wear, many pantographs are provided with a system of greasing the trolley wire.

Moreover, In order to obviate the drawback of discontinuity of contact between the shoe 11 and the trolley wire, particularly more significant at high speed of vehicle advance, present pneumatic systems of positioning the pantograph 10 provides for a higher value of upward push of the shoe 11 against the trolley wire at high speed. In this regard, there usually exist two or three values of push which are applied to the shoe 11 in correspondence to two or three values of the speed as detected by the tachometer devices of the train.

However, this entails that the push value is often haigher than that actually necessary for ensuring the continuous contact between sliding contact 13 and trolley wire 14, thus causing an increased wear due to fretting of these elements.

Therefore, it is an object of the present invention to reduce temporary detachments of pantograph shoe from trolley wire, simultaneously limiting the wear of both trolley lines and current collecting elements for electric-powered vehicles, in particular trains, in an automatic, reliable, efficient, simple and inexpensive way.

It is still an object of the present invention to allow in an efficient, simple and inexpensive way a detection of the wear degree of the current collecting elements for electric-powered vehicles.

It is specific subject matter of this invention an electro-pneumatic system for controlling push of at least one shoe of at least one pantograph for electric-powered vehicles, in particular trains, comprising control means connected to pneumatic means capable to move said at least one pantograph, **characterised in that** said control means controls said pneumatic means on the basis of a detected speed of the electric-powered vehicle, so as to regulate a rise of said at least one pantograph depending on said detected speed.

Always according to the invention, said pneumatic means may comprise at least one pneumatic cylinder capable to control a telescopic shaft connected to a first arm for driving said at least one pantograph, so that the extension of the telescopic shaft corresponds to a rise of said at least one pantograph.

Still according to the invention, said pneumatic means may further comprise an electromechanical actuator mechanically connected to a second arm for driving said at least one pantograph, for controlling a rise thereof, and to switching means capable to either enable or disable the pneumatic cylinder, so that when said detected speed is higher than a minimum value, preferably equal to zero, said control means controls the electromechanical actuator disabling the pneumatic cylinder.

Furthermore according to the invention, the first and second arms for driving said at least one pantograph may coincide with each other.

Always according to the invention, said switching means may comprise at least one electric pressure switch operated by a control lever mechanically connected to a rod a rotation of which is controlled by the electromechanical actuator, the rod being further mechanically connected to the second arm driving said at least one pantograph.

Still according to the invention, said control means may comprise a tachometer device, preferably a potentiometric one.

It is still specific subject matter of this invention a pantograph system for collecting current for electric-powered vehicles, in particular trains, comprising at least one shoe, **characterised in that** it comprises the electro-pneumatic system for controlling push as previously described.

Always according to the invention, said at least one shoe may comprise two or more diaphragm sliding contacts and it is capable to be rotated by a drum, provided with locking mechanical means, for selecting the one among said two or more diaphragm sliding contacts destined to collect current from a trolley line, said at least one shoe being provided with at least one conductive ring, preferably placed at an end of said at least one shoe, on which at least one corresponding brush for drawing energy collected by the selected diaphragm sliding contact is placed.

Still according to the invention, the system may further comprise image acquiring means, preferably infrared one, oriented so as to take a sliding contact of said at least one shoe in contact with a trolley line.

Furthermore according to the invention, said image acquiring means may comprise at least one camera, preferably a digital one, and/or at least one photo camera, preferably a digital one.

Always according to the invention, the system may further comprise processing means for processing images acquired by said image acquiring means.

Still according to the invention, said processing means may generate a signalling of failure when it determines that, in the processed images, an extension, preferably a mean extension, of areas at temperature higher than a, preferably adjustable, threshold value is larger than a maximum value.

Furthermore according to the invention, said processing means may activate a procedure of replacement of the sliding contact destined to collect current from the trolley line when it determines that, in the processed images, an extension, preferably a mean extension, of areas at temperature higher than a, preferably adjustable, threshold value is larger than a maximum value.

It is further specific subject matter of this invention a system for detecting wear of current collecting elements for electric-powered vehicles, in particular trains, provided with at least one pantograph, **characterised in that** it comprises image acquiring means, oriented so as to take a sliding contact of at least one shoe of said at least one pantograph, and processing means for processing images acquired by said image acquiring means.

Still according to the invention, said image acquiring means, preferably infrared one, may comprise at least one camera, preferably a digital one, and/or at least one photo camera, preferably a digital one.

Furthermore according to the invention, said processing means may generate a signalling of faiulure when it determines that, in the processed images, an extension, preferably a mean extension, of areas at temperature higher than a, preferably adjustable, threshold value is larger than a maximum value.

The present invention will be now described, by way of illustration and not by way of limitation, according to its preferred embodiments, by particularly referring to the Figures of the enclosed drawings, in which:
Figure 1 shows a pantograph accordino to the prior art;
Figure 2 shows a schematic block diagram of the electro-pneumatic system for controlling push according to the invention;
Figures 3 and 4 show a portion of a preferred embodiment of the electro-pneumatic system for controlling push according to the invention applied to a pantograph.

In the Figures, alike elements are indicated by same reference numbers.

The system according to the invention will be described with reference, only by way of example and not by way of limitation, to the case where the vehicle is a rail electric locomotive. However, it should be considered that the system according to the invention may be applied to any electric-powered vehicle provided with pantograph, such as, for instance, a railway or tramway vehicle (e.g. a underground railway vehicle or a tram), or a trolley vehicle (e.g. a trolley bus), still remaining within the scope of the present invention.

As it may be observed from the schematic block diagram of Figure 2, the system according to the invention comprises a control unit 20 (that may also comprise a central unit for controlling the locomotive and a tachometer device) that, on the basis of the actual advance speed of the locomotive, controls a pneumatic unit 21 for regulating the pressure of push of the shoe 11 of the pantograph 10 against the trolley wire. Preferably, the pneumatic unit 21 regulates the push of the shoe 11 through the regulation of the rise of the pantograph 10.

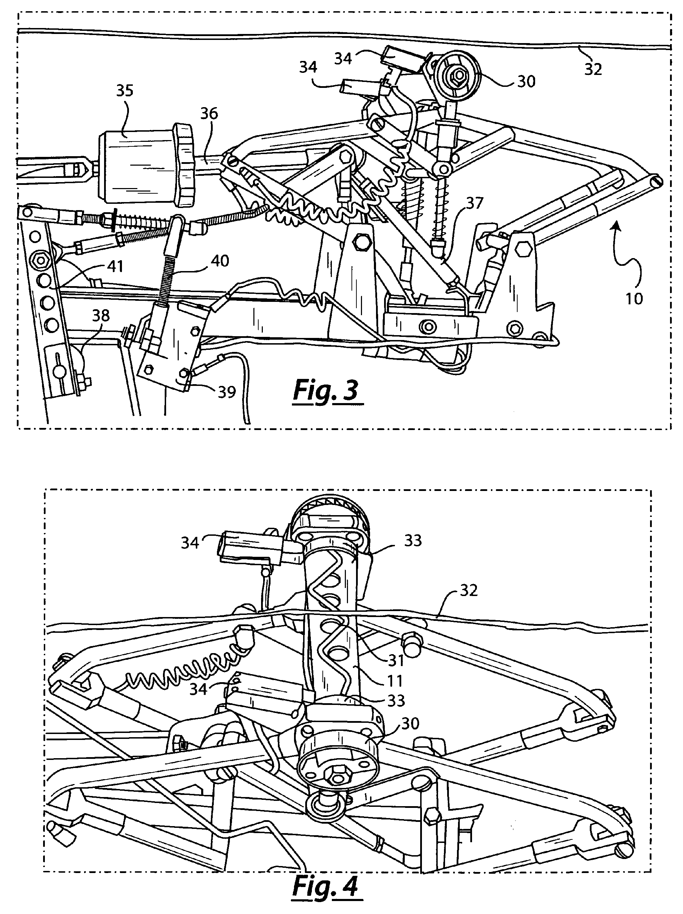

With reference to Figures 3 and 4, a preferred embodiment del system according to the invention may be observed. In particular, the pantograph 10 is equipped with a shoe 11 that may be rotated by a drum 30. Diaphragm sliding contacts 31 are installed on the shoe 11, which are capable to come into contact with the electric cable 32 of the trolley line, setting the continuity of the power supply circuit.

The rotating drum 30 is provided with an automatic device capable to cause the rotation thereof, each time the pantograph 10 starts to operate. In particular, an automatic device of self-locking is installed on the drum 30, which device intervenes after a new sliding contact 31 has been positioned. The shoe 11 is equipped at its ends with two rings 33 which are integral with all the diaphragm sliding contacts 31, and two brushes 34 are placed on the rings 33 which brushes draw the energy collected by the sliding contact 31 in contact with the trolley wire 32.

The initial rise of the pantograph 10 is controlled by a pneumatic cylinder 35 that controls a telescopic shaft 36 connected to an arm 37 for driving the pantograph 10, that is connected to the base of the metallic structure of the latter. In particular, for raising (or lowering) the pantograph 10, the pneumatic cylinder 35 lengthens (or shortens) the telescopic shaft 36.

In the preferred embodiment of the system shown in Figures 3 and 4, the pneumatic unit 21 sketched in Figure 2 also comprises, besides the pneumatic cylinder 35, an electromechanical actuator 38 and an electric pressure switch 39 (alternatively replaceable with any switching means) capable to either enable or disable operation of the pneumatic cylinder 35 depending on the position of a control lever 40 (that generates a related pressure in the fluid of the pressure switch 39). In this regard, other embodiments of the system according to the invention may comprise a second further pressure switch connected in parallel with the first one and insertable, either automatically (after a fault detection signalled by proper sensors) or by an operator, in case of failure of the latter.

The electromechanical actuator 38 controls rotation of a rod 41 mechanically connected, through respective linkage, to the control lever 40 of the pressure switch 35 and to the arm 37 driving the pantograph 10. In this regard, other embodiments may provide that the rod 41 is connected to a different further arm driving the pantograph 10.

In the preferred embodiment of the system shown in Figures 3 and 4, the control unit 20 sketched in Figure 2 comprises a, preferably potentiometric, tachometer device (not shown) that, on the basis of a value of resistance imposed by the counter electromotive force generated by the traction motors of the locomotive, corresponding to the speed of the latter, controls the electronic actuator 38.

In order to better understand the present invention, the operating modes of the preferred embodiment of the system shown in Figures 3 and 4 will be described in the following, similar modes being valid for the other embodiments of the electro-pneumatic control system according to the invention.

The first rise of the pantograph 10 is controlled by the pneumatic cylinder 35, which, by lengthening the telescopic shaft 36, operates the arm 37 driving the pantograph 10 causing its rise, When the sliding contact 31 on the shoe 11 of the pantograph 10 is in contact with the wire 32 of the trolley line, the locomotive and, in particular, its traction motors are electrically supplied.

When the locomotive begins to move, the tachometer device controls the electronic actuator 38 proportionally to the detected speed, thus making the rod 41 rotate, which rod, through the lever 40, opens the electric pressure switch 39, disabling the operation of the pneumatic cylinder 35. Simultaneously, through the arm 37 driving the pantograph 10, the electronic actuator 38 directly takes control of the rise of the pantograph 10, and consequently of the push of the sliding contact 31 of the shoe 11 against the trolley wire 32.

By controlling such push on the basis of the speed detected by the tachometer device, the electronic actuator 38 is capable to continuously vary the pressure of contact between shoe 11 of the pantograph 10 and trolley wire 32, determining a reduction of temporary detachments between them so as to limit their wear.

Optionally, the electro-pneumatic system for controlling push according to the invention may further be provided with a camera, mounted in a front position (in advance direction) with respect to the pantograph 10, oriented so as to take the shoe 11 when the latter is in contact with the trolley wire 32. In this regard, those skilled men in the art are capable to arrange adequate technical solutions for positioning the camera.

Such camera may send images to a monitor so that the engine driver may observe if the flashes produced by the fretting between sliding contact and trolley wire are regular, i.e. of limited extension.

In this regard, the camera may be replaced by a photo camera that periodically (preferably with high frequency) takes photographs.

More preferably, the (still more preferably digital) camera is an infrared one and sends the detected images to a processing unit that checks if, in the taken images, the mean extension of the areas at temperature higher than a, preferably adjustable, threshold value is not larger than a maximum value. In the case where such check gives a negative outcome, the processing unit may send to the engine driver a signalling of sliding contact failure. Possibly, the processing unit may further automatically activate replacement of the faulty sliding contact by carrying out the following operation (see Figures 3 and 4):
(at least partially) lowering the pantograph 10,
rotating the drum 30 until a new sound sliding contact 31 is facing the trolley wire 32, and
completely raising the pantograph 10 until the contact between the new sliding contact 31 and the trolley wire 32 is set.

In particular, the set of components for detecting the wear degree of the current collecting elements is also usable independently from the electro-pneumatic system for controlling push according to the invention.

The preferred embodiments have been above described and some modifications of this invention have been suggested, but it should be understood that those skilled in the art can make variations and changes, without so departing from the related scope of protection, as defined by the following claims.

## Claims

1. Electro-pneumatic system for controlling push of at least one shoe (11) of at least one pantograph (10) for electric-powered vehicles, in particular trains, comprising control means (20) connected to pneumatic means (21) capable to move said at least one pantograph (10), **characterised in that** said control means (20) controls said pneumatic means (21) on the basis of a detected speed of the electric-powered vehicle, so as to regulate a rise of said at least one pantograph (10) depending on said detected speed.

2. System according to claim 1, **characterised in that** said pneumatic means (21) comprises at least one pneumatic cylinder (35) capable to control a telescopic shaft (36) connected to a first arm (37) for driving said at least one pantograph (10), so that the extension of the telescopic shaft (36) corresponds to a rise of said at least one pantograph (10).

3. System according to claim 2, **characterised in that** said pneumatic means (21) further comprises an electromechanical actuator (38) mechanically connected to a second arm (37) for driving said at least one pantograph (10), for controlling a rise thereof, and to switching means (39) capable to either enable or disable the pneumatic cylinder (35), so that when said detected speed is higher than a minimum value, preferably equal to zero, said control means (20) controls the electromechanical actuator (38) disabling the pneumatic cylinder (35).

4. System according to claim 3, **characterised in that** the first and second arms (37) for driving said at least one pantograph (10) coincide with each other.

5. System according to claim 3 or 4, **characterised in that** said switching means comprises at least one electric pressure switch (39) operated by a control lever (40) mechanically connected to a rod (41) a rotation of which is controlled by the electromechanical actuator (38), the rod (41) being further mechanically connected to the second arm (37) driving said at least one pantograph (10).

6. System according to any one of the preceding claims, **characterised in that** said control means (20) comprises a tachometer device, preferably a potentiometric one.

7. Pantograph (10) system for collecting current for electric-powered vehicles, in particular trains, comprising at least one shoe (11),
**characterised in that** it comprises the electro-pneumatic system for controlling push according to any one of claims 1-6.

8. System according to claim 7, **characterised in that** said at least one shoe (11) comprises two or more diaphragm sliding contacts (31) and it is capable to be rotated by a drum (30), provided with locking mechanical means, for selecting the one among said two or more diaphragm sliding contacts (31) destined to collect current from a trolley line (32), said at least one shoe (11) being provided with at least one conductive ring (33), preferably placed at an end of said at least one shoe (11), on which at least one corresponding brush (34) for drawing energy collected by the selected diaphragm sliding contact (31) is placed.

9. System according to claim 7 or 8, **characterised in that** it further comprises image acquiring means, preferably infrared one, oriented so as to take a sliding contact of said at least one shoe (11) in contact with a trolley line (32).

10. System according to claim 9, **characterised in that** said image acquiring means comprises at least one camera, preferably a digital one, and/or at least one photo camera, preferably a digital one.

11. System according to claim 9 or 10, **characterised in that** it further comprises processing means for processing images acquired by said image acquiring means.

12. System according to claim 11, **characterised in that** said processing means generates a signalling of failure when it determines that, in the processed images, an extension, preferably a mean extension, of areas at temperature higher than a, preferably adjustable, threshold value is larger than a maximum value.

13. System according to claim 11 or 12, when depending on claim 8, **characterised in that** said processing means activates a procedure of replacement of the sliding contact destined to collect current from the trolley line (32) when it determines that, in the processed images, an extension, preferably a mean extension, of areas at temperature higher than a, preferably adjustable, threshold value is larger than a maximum value.

14. System for detecting wear of current collecting elements for electric-powered vehicles, in particular trains, provided with at least one pantograph (10), **characterised in that** it comprises image acquiring means, oriented so as to take a sliding contact of at least one shoe (11) of said at least one pantograph (10), and processing means for processing images acquired by said image acquiring means.

15. System according to claim 14, **characterised in that** said image acquiring means, preferably infrared one, comprises at least one camera, preferably a digital one, and/or at least one photo camera, preferably a digital one.

16. System according to claim 14 or 15, **characterised in that** said processing means generates a signalling of faiulure when it determines that, in the processed images, an extension, preferably a mean extension, of areas at temperature higher than a, preferably adjustable, threshold value is larger than a maximum value.
